(19) Europäisches Patentamt
European Patent Office
Office européen des brevets

(11) **EP 3 295 265 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **16781713.9**

(22) Anmeldetag: **06.10.2016**

(51) Internationale Patentklassifikation (IPC):
**G05B 19/409** *(2006.01)* **B67C 3/00** *(2006.01)*

(52) Gemeinsame Patentklassifikation (CPC):
**G05B 19/409;** G05B 2219/36133

(86) Internationale Anmeldenummer:
**PCT/EP2016/073832**

(87) Internationale Veröffentlichungsnummer:
**WO 2017/076568 (11.05.2017 Gazette 2017/19)**

(54) **BEDIENMODUL FÜR EINE MASCHINE IN DER LEBENSMITTELINDUSTRIE**

OPERATING MODULE FOR A MACHINE IN THE FOOD INDUSTRY

MODULE DE COMMANDE D'UNE MACHINE DANS L'INDUSTRIE ALIMENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2015 DE 102015221517**

(43) Veröffentlichungstag der Anmeldung:
**21.03.2018 Patentblatt 2018/12**

(73) Patentinhaber: **Krones AG**
**93073 Neutraubling (DE)**

(72) Erfinder:
• **BIELMEIER, Theodor**
**93073 Neutraubling (DE)**
• **VOGL, Sebastian**
**93073 Neutraubling (DE)**
• **SEIDL, Raymon**
**93073 Neutraubling (DE)**

• **PRONOLD, Timo**
**93073 Neutraubling (DE)**
• **STAUBER, Thomas**
**93073 Neutraubling (DE)**
• **BOEHM, Johannes**
**93073 Neutraubling (DE)**
• **SCHMIDT, Stefan**
**93073 Neutraubling (DE)**
• **PALUMBO, Pino-Giuseppe**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
EP-A2- 1 895 374          DE-A1-102008 053 765
DE-A1-102012 216 770     DE-A1-102014 218 211

**Beschreibung**

Die Erfindung betrifft ein Verfahren zum dynamischen Erzeugen einer Bedienoberfläche für ein Bedienmodul zum Bedienen einer Maschine der Lebensmittelindustrie gemäß Anspruch 1 und ein Bedienmodul zum Steuern und Bedienen einer Maschine der Lebensmittelindustrie gemäß Anspruch 8.

**Stand der Technik**

Im Bereich der industriellen Fertigung sind Bedienmodule, wie beispielsweise "Human Machine Interfaces" (HMIs) ein gängiges Mittel, um die Fertigungsprozesse zu steuern und zu kontrollieren, bei denen oftmals eine große Vielzahl von Maschinen und Maschinenmodulen beteiligt ist. Aber nicht nur spezialisierte Bedienmodule für ein bestimmtes Modul oder eine bestimmte Maschine sind gängige Mittel zur Steuerung, sondern auch aufgabenübergreifende Computerprogramme, mit denen man mit standardmäßigen Computersystemen eine Vielzahl von Maschinen steuern kann. Ebenso wird die Anzahl von Bedienmodulen immer weiter reduziert und es werden weniger Bedienmodule eingesetzt, die dafür jedoch einen breiteren Aufgabenbereich haben. Nach heutigem Stand der Technik erfolgt die Bedienung von Maschinen und Anlagen überwiegend über speziell dafür entwickelte Softwarelösungen.

Solche Computerprogramme und Bedienmodule steigen dadurch in ihrem Umfang und dementsprechend in ihrer Komplexität enorm an und fordern einen hohen Navigationsaufwand. In einer Anlage stehen in der Regel acht oder mehr Maschinen eines Herstellers, die über Signalaustausch als Anlage fungieren und passend zueinander die Produktion Starten und Stoppen.

Komplexe Anlagen wie beispielsweise eine Fertigungsstraße zum Blasen, Etikettieren, Füllen und Verschließen von Behältern kann dadurch mehrere hundert Seiten an Bedienelementen haben. Zur Strukturierung der Inhalte der Bedienseiten wird meist der klassische, feste Menüansatz mit Hauptmenüpunkten und 1-n Unterpunkten gewählt, in die die Inhalte fest eingegliedert werden. Ein ähnlicher Ansatz ist das Prinzip einer Hauptbuttonleiste, die durch eine zweite Buttonleiste, z.B. Tabreiter für Untergruppen zu den jeweiligen Hauptbuttons ergänzt wird. Die feste Struktur eines Menüs und die Eingliederung der Inhalte projiziert das mentale Modell des Erstellers auf das System. Der spätere Nutzer denkt aber oft anders und hat Probleme, die Inhalte zu finden und Inhalte wiederzufinden, weil der Weg für ihn nicht logisch ist und daher nicht reproduzierbar ist. Noch problematischer wird es, wenn unterschiedliche Nutzergruppen mit unterschiedlichem Erfahrungsschatz und unterschiedlichen Aufgaben mit ein und derselben festdefinierten Struktur arbeiten müssen. Da die mentalen Modelle allesamt anders sind, wird es nicht gelingen, dass alle optimal durch die Menüstruktur unterstützt werden. Letztendlich wird man sich für einen mehr oder weniger guten Kompromiss entscheiden oder bewusst eine Nutzergruppe besser unterstützen als die anderen.

Der mit der klassischen Menüführung einhergehende Navigationsaufwand stellt einen sicherheitskritischen Aspekt dar. Um auf Produktionsprozesse und Geschehnisse schnell reagieren zu können, ist es wichtig, dass ein Anwender schnell die passenden Bedienelemente auffindet und die Navigationsarbeit minimiert wird.

DE 10 2014 218211 A1 offenbart ein Bediengerät, welches mit einem Bedienungssteuergerät einer NC-Werkzeugmaschine verbunden ist, zum Eingeben eines Bedienungssignals an das Bedienungssteuergerät. Die Bediengerät umfasst eine Speichereinheit für Attributinformationen, welche darin Attributinformationen speichert, welche für zumindest einen Teil der Bedienungs-Bildschirme festgelegt sind, welche für jede der Betriebsarten festgelegt sind, und welche eine Beziehung zwischen jedem der Bedienungs-Bildschirme und seiner entsprechenden Betriebsart definieren. Eine Speichereinheit für Informationen des anfänglichen Bedienungs-Bildschirms ist eine Funktionseinheit zum Speichern von Informationen, welche sich auf Bedienungs-Bildschirme beziehen, welche zu anfangs bei einem Wechsel der Betriebsart (sogenannte Ausgangsbildschirme, und im Folgenden als "anfängliche Bedienungs-Bildschirme" bezeichnet) unter den Bedienungs-Bildschirmen angezeigt werden sollen, welche für jede der Betriebsarten vorbereitet sind. Eine Die Wechseleinheit überwacht die Darstellung der Bedienungs-Bildschirme und gibt ein Wechselsignal für die Betriebsart zum Wechseln zu der entsprechenden Betriebsart an die Bedienungssteuereinheit aus.

DE 10 2008 053765 A1 offenbart ein Verfahren zum Kontrollieren einer Anlage.

EP 1 895 374 A2 offenbart HMI-Geräte mit integriertem benutzerdefiniertem Verhalten.

**Aufgabe**

Es ist somit die Aufgabe der Erfindung, ein Bedienmodul für eine Maschine der Lebensmittelindustrie, insbesondere der Getränkemittelindustrie zur verbesserten Steuerung der Maschine, sowie ein entsprechendes Verfahren bereitzustellen.

**Lösung**

Die Aufgabe wird erfindungsgemäß durch ein Verfahren gemäß Anspruch 1 und ein Bedienmodul gemäß Anspruch 8 gelöst. Vorteilhafte Ausführungsformen und Weiterbildungen sind in den Unteransprüchen erfasst.

Eine Ausführungsform der Erfindung betrifft ein Bedienmodul zum Steuern und Bedienen einer Maschine der Lebensmittelindustrie, insbesondere der Getränkemittelindustrie. Das Bedienmodul kann zum Anzeigen einer Bedienoberfläche zum Bedienen der Maschine eingerichtet sein. Die Bedienoberfläche gemäß der vorliegenden Erfindung umfasst eine oder mehrere Bedienelemente aus einer Vielzahl von Bedienelementen. Die Vielzahl von Bedienelementen ist in einer Speichereinheit gespeichert. Jedem der Bedienelemente kann eine Vielzahl von Attributen zugeordnet sein und jedem der zugeordneten Attribute kann wenigstens ein Wert zugewiesen sein.

Das Bedienmodul kann des Weiteren zum dynamischen Erzeugen der Bedienoberfläche an dem Bedienmodul eingerichtet sein. Das dynamische Erzeugen kann dabei mehrere separate Schritte umfassen.

In einem ersten Schritt kann beispielsweise ein Bedienmodulkontext erfasst werden. Der Bedienmodulkontext kann einen oder mehrere Parameter spezifizieren und jeder Parameter kann einen oder mehrere Werte für ein Attribut festlegen.

Für jedes der Attribute von dem einen oder mehreren Parametern, kann in einem weiteren Schritt eine Untermenge aus der Vielzahl von Bedienelementen bestimmt werden. Die Untermenge kann alle Bedienelemente umfassen, die wenigstens einen festgelegten Wert des Attributs aufweisen.

In einem weiteren Schritt können das auf der Bedienoberfläche anzuzeigende eine oder die mehreren Bedienelemente aus den Untermengen bestimmt werden. Die anzuzeigenden Bedienelemente können solche Bedienelemente sein, die als Schnittmenge in allen Untermengen enthalten sind.

Erfindungsgemäße Ausführungsformen werden anhand der nachfolgenden Zeichnungen beschrieben. Es zeigen:

**Figur 1** ein System mit einer Vielzahl von Maschinen und Maschinenmodulen in einer Fertigungsstraße, die durch ein Bedienmodul gesteuert werden, gemäß einer Ausführungsform der Erfindung;

**Figur 2** eine schematische Ansicht einer Bedienoberfläche eines Steuerprogramms, gemäß einer Ausführungsform der Erfindung;

**Figur 3** ein beispielhaftes Bedienelement für eine Maschine oder ein Modul, das mit Metadaten verknüpft ist, gemäß einer Ausführungsform der Erfindung;

**Figur 4** eine Vielzahl von Bedienelementen mit verschiedenen Werten der entsprechenden Attribute von jedem Bedienelement, gemäß einer Ausführungsform der Erfindung; und

**Figur 5** ein Verfahren zum Bestimmen der Bedienelemente, die auf einem Bedienmodul angezeigt werden sollen, gemäß einer Ausführungsform der Erfindung.

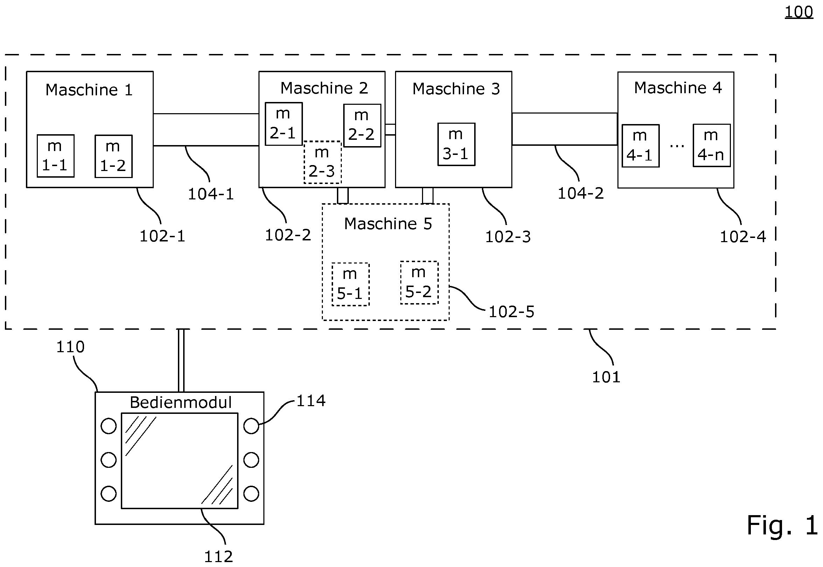

Die Figur 1 zeigt eine Zusammenstellung von Maschinen 102-1 bis 102-5, die in einer Fertigungsstraße 101 miteinander gekoppelt sind. Wie zu sehen ist, können die verschiedenen Maschinen jeweils aus einem oder mehreren Modulen bestehen, wie beispielsweise die Maschine 1 102-1 aus den zwei Modulen m1-1 und m1-2. Manche Module können dabei austauschbar oder optional sein, wie beispielsweise das Modul m2-3 in Maschine 2 102-2. In der Fertigungsstraße 101 können auch ganze Maschinen optional nachrüstbar oder austauschbar sein, wie beispielsweise Maschine 5 102-5 mit dem Modulen m5-1 und m5-2, die entsprechend verschiedener Szenarien durch eine oder mehrere andere Maschinen ausgetauscht werden kann. Die Maschinen können zusätzlich über verschiedene Fließbänder miteinander verbunden sein, wie beispielsweise Fließband 104-1 und Fließband 104-2.

Ein Beispiel für eine solche Fertigungsstraße 101 kann beispielsweise eine Abfüllanlage in der Getränkemittelindustrie sein, die neben der Aufgabe des Abfüllens noch weitere Prozesse durchführt, wie beispielsweise das Blasen, Etikettieren und Verschließen von Getränkebehältern. Jedoch ist die vorliegende Erfindung nicht auf die Steuerung von bestimmten Maschinen in der industriellen Fertigung beschränkt, sondern kann auch für andere Maschinen und Maschinenmodule verwendet werden.

Zusätzlich ist in Figur 1 ein Bedienmodul 110 gezeigt, das an die Fertigungsstraße 101 gekoppelt ist. In der beispielhaften Ausführungsform aus Figur 1 kann das Bedienmodul 110 jede der Maschinen 1 bis 5 und alle darin enthaltenen Module steuern und kann auch die Fließbänder 104-1 und 104-2 steuern. In einer alternativen Ausführungsform kann das Bedienmodul 110 nur ein Bedienmodul von vielen Bedienmodulen sein, welches nur eine der Maschinen, oder eine Untergruppe der Maschinen oder Module steuert. Das Bedienmodul 110 aus Figur 1 kann einen Bildschirm 112 umfassen, auf dem eine Steueroberfläche an einen Benutzer angezeigt werden kann. Außerdem kann das Bedienmodul 110 auch eine oder mehrere Eingabevorrichtungen 114 umfassen, durch welche ein Benutzer Steuerbefehle und Menü-Navigationsbefehle in das Bedienmodul 110 eingeben kann. Beispielsweise können die Eingabevorrichtungen 114 Druckknöpfe, Regler, Schalter, Steuerhebel, ein Trackpad, eine Tastatur, eine Maus, eine Kamera, oder jede andere Vorrichtung zum Eingeben eines Benutzerbefehls sein.

In einer Ausführungsform kann das Bedienmodul 110 ein HMI (Human Machine Interface) sein, dessen Bildschirm 112 ein Touchscreen sein kann. Jedoch ist die vorliegende Erfindung nicht auf eine spezielle physikalische Form des Bedienmoduls 110 beschränkt. Weitere Beispiele für ein Bedienmodul 110 können ein Mobiltelefon, ein tragbarer Computer, ein Server, ein Terminal, ein Desktop-PC, oder ein Tablet-PC sein.

Durch die gewünschte Skalierbarkeit der Fertigungsstraße 101 steigt auch die Komplexität einer Menüführung des Bedienmoduls 110 enorm an. Es ist davon auszugehen, dass jede der Maschinen 102 aus Figur 1 eine Vielzahl von Bedienseiten mit jeweils einer Vielzahl von Bedienelementen umfasst. Je komplexer eine Maschine ist, desto mehr Bedienseiten für unterschiedliche Interaktionen mit der Maschine müssen in einem Steuerprogramm für die Anlage verfügbar sein und untergebracht werden.

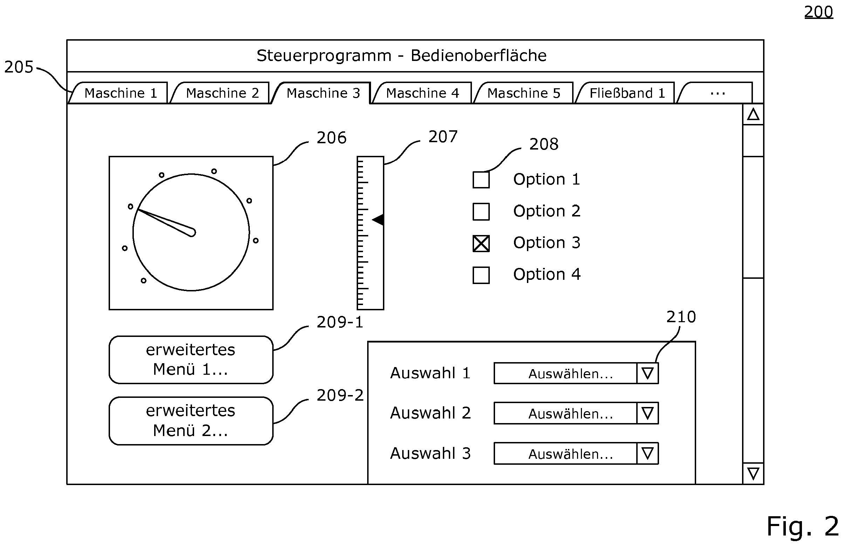

Figur 2 zeigt eine mögliche Bedienoberfläche 200 in der verschiedene Untermenüs durch mehrere Reiter 205 untergebracht sind. In dem Beispiel aus Figur 2 ist ein Untermenü für die Maschine 3 auf dem Bildschirm angezeigt, dass eine Vielzahl von Steuerelementen 206-208, erweiterte Menüs 209-1 und 209-2, und Auswahlmöglichkeiten 210 umfasst. In der beispielhaften Ausführungsform aus Figur 2 ist eine vereinfachte Menüführung gezeigt, die nach Maschinen sortiert ist. Jedoch gibt es eine Vielzahl von anderen Menüführungen, welche die Bedienelemente und Bedienseiten nach anderen Kriterien in einem Steuerprogramm und dessen Bedienoberfläche sortieren. Je nach Anwendung und Aufgabenfeld können verschiedene dieser Menüführungsalternativen vorteilhafter als andere sein.

Typischerweise lassen sich jedoch die feste Struktur und Hierarchie eines gegebenen Steuerprogramms nicht einfach auflösen und benutzerdefiniert umwandeln. Ausführungsformen der vorliegenden Erfindung stellen eine Bedienoberfläche und ein entsprechendes Verfahren zum Erstellen einer Bedienoberfläche zur Verfügung, die sich dynamisch auf einen Kontext anpasst. Dieses dynamische Anpassen der Bedienoberfläche kann zur Laufzeit des Bedienmoduls erfolgen.

Beispielsweise kann sich eine Bedienoberfläche der vorliegenden Erfindung entsprechend einer Benutzergruppe eines eingeloggten Benutzers und/oder einem Standort des Bedienmoduls anpassen und kann somit die Navigationszeit durch die Menüs eines Steuerprogramms minimieren. Die kann erreicht werden indem entsprechend eines Kontextes unmittelbar benötigten Bedienelemente auf einer Bedienoberfläche des Steuerprogramms angezeigt werden und einem Benutzer zur Verfügung gestellt werden.

Um ein solches dynamisches Erzeugen einer Bedienoberfläche entsprechend eines Kontextes zu ermöglichen, werden entsprechend einer Ausführungsform der vorliegenden Erfindung alle verschiedenen digitalen Bedienelemente nicht starr in eine feste Struktur des Steuerprogramms gebracht, sondern sind als einzelne Elemente in einer Speichereinheit gespeichert. Die Speichereinheit mit den Bedienelementen kann dabei in dem Bedienmodul 110 sein, oder kann sich zentral in einem entfernten Server befinden, von dem sich das Bedienmodul die entsprechenden Bedienelemente herunterladen kann.

Ein Bedienelement (oder auch digitales Bedienelement) entsprechend der vorliegenden Erfindung kann dabei ein einzelnes interaktives Element zum Steuern, Programmieren, Auslesen und/oder Kontrollieren eines technischen Vorgangs in einer Maschine oder einem Modul sein. Ein solches interaktives Element kann beispielsweise ein Drehregler, ein Schaltkästchen, ein Schalter oder ein ähnliches Element zur Interaktion eines Anwenders mit einem Produktionsprozess der Fertigungsstraße 101 sein. Ein Bedienelement entsprechend der vorliegenden Erfindung kann aber auch eine Gruppe von verschiedenen mehreren interaktiven Elementen sein, die logisch miteinander in einer Beziehung stehen, wie beispielsweise verschiedene Steuerknöpfe, die benötigt werden, um ein bestimmtes Modul zu steuern.

Gemäß einer Ausführungsform der vorliegenden Erfindung müssen die einzelnen Bedienelemente, die zunächst ohne Hierarchie in der Speichereinheit gespeichert sind, schnell und auf effiziente Weise aufgefunden werden können. Dies kann in einer Ausführungsform mittels eines Bedienmodulkontextes (BMK) geschehen. Der Betriebsmodulkontext kann beispielsweise einen Ort, eine Benutzergruppe, einen Aufgabenbereich und/oder eine Berechtigung eines eingeloggten Anwenders, einen aktuellen Produktionszustand, ein derzeitiges Produktionsprodukt, einen Ressourcenbestand in verschiedenen Modulen, und weitere ähnliche Zustände berücksichtigen. Wie weiter unten beschrieben, kann auch die Art und die Beschaffenheit des Bedienmoduls bei der Zusammenstellung der einzelnen Bedienelemente berücksichtigt werden. In einer weiteren Ausführungsform kann der Bedienmodulkontext auch wenigstens teilweise manuell durch einen Benutzer des Bedienmoduls spezifiziert werden, wodurch ein Benutzer sich schnell und intuitiv eine gewünschte Bedienoberfläche auf dem Bedienmodul zusammenstellen kann.

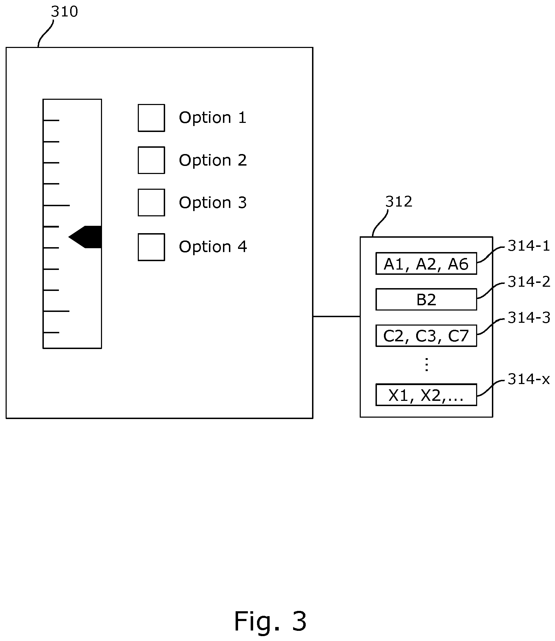

Um die Bedienelemente effizient aufzufinden, werden in einer Ausführungsform die Bedienelemente mit Metadaten versehen. Figur 3 zeigt ein Beispiel eines möglichen Bedienelements 310, das mit entsprechenden Metadaten 312 verknüpft ist.

Das beispielshafte Bedienelement 310 aus Figur 3 umfasst eine regelbare Skala und insgesamt vier Kontrollkästchen. Wie bereits erwähnt, kann das Bedienelement auch mehr oder weniger interaktive Elemente umfassen. Das Bedienelement 310 kann für eine spezielle Steueroperation für ein bestimmtes Element in einer bestimmten Maschine sein. Die verknüpften Metadaten 312 umfassen mehrere Attribute (oder Attributfelder) 314-1 bis 314-x. Jedes der Attribute 314 kann einen oder mehrere Werte umfassen.

Ein Attribut 314 kann beispielsweise spezifizieren, ob ein Bedienelement auf einem Mobilgerät angezeigt werden kann. In diesem Beispiel könnte das Attribut sein: "mobil anzeigbar" und ein Wert, der von einem bestimmten Bedienelement angegeben werden kann ist entweder "ja" oder "nein" (oder "0" und "1", oder ähnliche Logikparameter). Ein weiteres Attribut kann beispielsweise "Reglertyp" sein. Mögliche Werte, die ein Bedienelement für das Attribut "Reglertyp" annehmen kann, wären beispielsweise "Zweipunktregler", "Dreipunktregler", "Proportionalregler", "Integralregler", "PID-Regler", "Differentialregler" und so weiter. In der Praxis können viele weitere Attribute für die Bedienelemente definiert und mit Werten versehen werden.

Wird beispielsweise durch einen Bedienmodulkontext spezifiziert, dass ein mobiles Bedienelement alle Integralregler einer Anlage benötigt, so werden die Attribute "mobil anzeigbar" und "Reglertyp" von allen gespeicherten Bedienelementen analysiert und entsprechend ausgewählt, oder eben nicht ausgewählt. Durch weitere Spezifikationen des Bedienmodulkontextes kann die Auswahl der Bedienelemente noch weiter verringert und verfeinert werden.

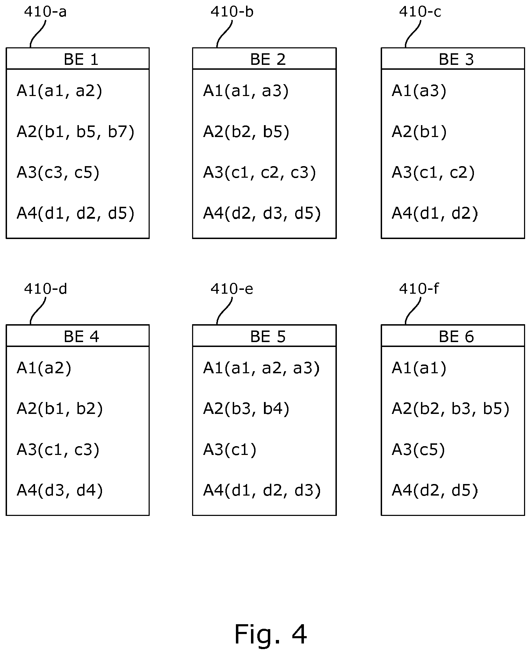

Figur 4 zeigt ein Beispiel mit sechs Bedienelementen 410-a bis 410-f, die für die Auswahl zur Verfügung stehen. Dieses rein illustrative Beispiel sei nur zur Veranschaulichung der vorliegenden Erfindung gedacht. In der praktischen Anwendung ist die Anzahl an möglichen Bedienelementen, die zur Auswahl stehen für gewöhnlich weit höher und kann Größenordnungen von mehreren Tausend Bedienelementen annehmen. Auch die Anzahl der Attribute A1, A2, A3 und A4 in dem Beispiel aus Figur 4 ist rein illustrativ angedacht und soll nicht als Beschränkung ausgelegt werden.

Durch einen oder mehrere Bedienmodulkontexte können ein oder mehrere Bedienelemente aus den sechs Bedienelementen 410-a-f aufgefunden werden und dann zusammen auf dem Bedienmodul 110 angezeigt werden. Dabei kann ein Bedienmodulkontext als eine Art Suchanfrage verstanden werden, der einen oder mehrere Parameter spezifiziert, wie beispielsweise ein oder mehrere Attribute und entsprechende Werte.

Gemäß einer Ausführungsform umfasst ein Bedienmodulkontext einen oder mehrere Parameter, wobei jeder der Parameter einen oder mehrere Werte eines Attributs festlegt. Angewandt auf das Beispiel aus Figur 4, könnte ein Parameter beispielsweise wie folgt zusammengesetzt werden:

$$P=A1(a3)$$

Durch Anwenden des Parameters P wird eine Untermenge von Bedienelementen 410 gebildet. In diesem Fall beinhaltet die Untermenge des Parameters P alle Bedienelemente, die den Wert "a3" in dem Attribut A1 gesetzt haben, also $U=\{BE2; BE3; BE5\}$. Wenn der Parameter noch einen weiteren Wert beinhaltet, d.h. einen weiteren Wert für ein Attribut, dann werden die einzelnen Werte des Parameters als ODER-Verknüpfung angesehen und es wird eine Untermenge an Bedienelementen gebildet, die wenigstens einen der mehreren Werte umfassen. Beispielsweise könnte der Parameter wie folgt aussehen:

$$P= A1(a1; a3)$$

Dadurch würde die Untermenge wie folgt zusammengesetzt werden: $U=\{BE1; BE2; BE3; BE5; BE6\}$.

Auf ähnliche Weise kann auch eine UND-Verknüpfung angesehen werden. Wenn in dem selben Bedienmodulkontext noch weitere Parameter (d.h. weitere Attribut-Definitionen) spezifiziert werden, dann beinhaltet eine finale Untermenge die Schnittmenge aus allen Untermengen der einzelnen Parameter. Beispielsweise können zwei Parameter P1 und P2 in dem Bedienmodulkontext definiert sein:

$$P1=A1(a1; a3) \text{ und } P2=A4(d3)$$

Dadurch können als Zwischenschritt zwei separate Untermengen an Bedienelementen gebildet oder bestimmt werden: $U1=\{BE1; BE2; BE3; BE5; BE6\}$ und $U2=\{BE2; BE4; BE5\}$. Durch die UND-Verknüpfung wird also in einer finalen Menge Uf jedes Bedienelement sein, das in der Schnittmenge von allen Untermengen enthalten ist: $Uf=\{BE2; BE5\}$. Das heißt in dem Beispiel aus Figur 4 würden die Bedienelemente BE2 410-b und BE5 410-e auf dem Bedienmodul 110 angezeigt werden, wenn der oben gezeigte Bedienmodulkontext mit P1 und P2 angewendet wird. Um weitere Bedienelemente anzuzeigen können weitere Bedienmodulkontexte angewendet werden.

Ein Vorteil der oben beschriebenen Auffindung von Bedienelementen ist, dass wenn sich ein Wert eines Parameters (d.h. eines Attributs) in dem Bedienmodulkontext ändert, nur eine Untermenge neu bestimmt werden muss und das Ergebnis der anzuzeigenden Bedienelemente schnell neu evaluiert werden kann.

Ändert sich beispielsweise nur der Ort des Bedienmoduls 110, dann kann die Bedienoberfläche dynamisch angepasst werden, da beispielsweise nur die Untermenge des Attributs "Ort" neu bestimmt werden muss. Wenn also beispielsweise ein Wartungsmitarbeiter mit einem tragbaren Bedienmodul 110, dessen Bedienmodulkontext auf Wartungsarbeiten eingestellt ist, vor einer ersten Maschine steht, dann wird die Bedienoberfläche alle Bedienelemente auf dem Bedienmodul 110 anzeigen, die für die Wartungsarbeiten an dieser ersten Maschine benötigt werden. Bewegt sich der Wartungsarbeiter anschließend weiter und geht zu einer zweiten Maschine, dann ändert sich der Parameter des Attributs "Ort" von dem Wert "Maschine 1" zu "Maschine 2" während alle anderen Attribute, die für die Wartungsarbeiten relevant sind, sich nicht mehr ändern. Dadurch muss nur die Untermenge für "Ort" neu gebildet werden und die Schnittmenge aus den bereits bestehenden Untermengen neu bestimmt werden. Eine automatische Ortserkennung des Bedienmoduls 110 kann beispielsweise durch RFID, WLAN, Bluetooth oder ähnliche Mittel ermöglicht werden.

Dieses beschriebene Verfahren zur dynamischen Bildung von einer Bedienoberfläche verkürzt die Navigationszeit zum Auffinden der benötigten Bedienelemente auf ein Minimum, was vor allem im laufenden Betrieb ein sicherheitsrelevanter Aspekt ist. Durch die Verkürzung der Navigationszeit, die benötigt wird, um die benötigten Bedienelemente auf dem Bedienmodul 110 zu finden, kann schneller in eine Produktion eingegriffen werden und schneller auf Vorkommnisse reagiert werden als in dem klassischen Bedienmenü, wie in Figur 2 gezeigt. Auch auf vom System unvorhergesehene Situationen kann schneller reagiert werden, da ein Benutzer auch manuell den Bedienmodulkontext beeinflussen kann und über Attribut-Festlegung selbst die passenden Bedienelemente auffinden kann.

Weitere Attribute können beispielsweise ein Anlagenkennzeichen, eine Baugruppenkennzeichnung, eine Bauteilkennzeichnung, einen Maschinenzustand, einen Anlagenzustand, eine persönliche Einstellungen, persönliche Präferenzen, die automatisch ermittelt und/oder von einem Benutzer selbst konfiguriert werden, oder ein bisheriges Nutzungsverhalten sein. Jedoch sind nicht alle dieser aufgeführten Attribute erforderlich und es können auch weitere Attribute festgelegt werden.

Ein weiterer Vorteil der vorliegenden Erfindung betrifft die Herstellung von Maschinen und der entsprechenden Steuersoftware. Ein Hersteller wird nicht mehr gezwungen sein, ein starres Menü der Bedienoberfläche eines Steuerprogramms zu programmieren, das sich auch nur schwer erweitern, personalisieren oder skalieren lässt. Stattdessen liefert ein Hersteller nur noch eine Sammlung von Bedienelementen, die mit entsprechenden Metadaten versehen sind, damit über den Bedienmodulkontext immer automatisch die richtigen Bedienelemente auf einem Bedienmodul angezeigt werden. Dadurch kann auch der Umbau, oder die Erweiterung einer Maschine sehr einfach in die Steuerung integriert werden. Es müssen in einem solchen Fall nur die entsprechenden Bedienelemente für ein neues Modul in den Speicher gebracht werden und das Bedienmodul 110 kann die neuen Bedienelemente sofort auffinden und anzeigen.

Dadurch wird auch die Wartung von Außerhalb, beispielsweise von einem Hersteller der Maschinen über einen VNC-Zugang erleichtert, da die Bedienelemente weitere Attribute wie "Maschine", "Anlage" und "Kunde" von Werk ab beinhalten können. Auch die Aktualisierung der Metadaten für ein Bedienelement wird dadurch stark vereinfacht.

Auch die Anpassung auf eine bestimmte Art von Bedienmodul 110 ist durch die vorliegende Erfindung vereinfacht. In einer Ausführungsform kann das Bedienmodul 110 den Bedienmodulkontext auf seine Eigenschaften anpassen. Dafür können verschiedene Attribute wie "Bildschirmauflösung", "mobil anwendbar", "verfügbare Eingabevorrichtung" und so weiter definiert werden und ein Bedienmodul 110 setzt die Werte entsprechend seiner Eigenschaften, so dass nur solche Versionen der Bedienelemente auf dem Bedienmodul 110 angezeigt werden, die das Bedienmodul 110 auch tatsächlich verwenden kann und darf.

In einer weiteren Ausführungsform können mehreren Bedienelemente, die gemäß verschiedener Bedienmodulkontexte einmal auf dem Bedienmodul angezeigt werden auch als eine Gruppe von Bedienelementen in einem Speicherelement gespeichert werden. Bei erneuter Ermittlung der Bedienmodulkontexte kann die Gruppe von Bedienelementen sofort aufgerufen werden, ohne dass die Auffinde-Prozedur erneut durchgeführt werden muss. Dabei können die Bedienelemente in einer Speichereinheit eines entfernten Servers gespeichert werden und die Bedienoberfläche kann durch entsprechendes Referenzieren auf die Bedienelemente auf dem Server gebildet werden. Ein Bedienelement kann dabei in einer Gruppe oder auch in beliebig vielen Gruppen gleichzeitig vorkommen. Jede Gruppe ist dabei eigenständig. Beispielsweise hat das Entfernen aus einer Gruppe keinen Einfluss auf die anderen dynamischen Gruppierungen.

Der entfernte Server, auf dem die Bedienelemente und/oder Gruppen von Bedienelementen gespeichert werden, kann in der Anlage stehen, kann aber auch örtlich weit entfernt sein. Zum Beispiel kann der entfernte Server in einem Headquarter eines Getränkekonzerns stehen, der sich Statistiken aller seiner Blasmaschinen anzeigen lassen kann. In einer weiteren Ausführungsform kann der entfernte Server beliebig skaliert sein und alle Formen annehmen, von einem einelnen Bauteil bis hin zu einer (örtlich getrennten) Leitwarte.

Da viele Benutzer aus einem Pool arbeiten, kann es Überschneidungen bei der Nutzung geben. In diesem Fall kann eine Technik zum Einsatz kommen, die in Dateisystemen üblich ist und Lese- und Schreibzugriffe regelt. Beispielsweise kann ein Bedienelement, das auf ein Bedienmodul 110 geladen wird zunächst nur Leserechte haben und Veränderungen in der Einstellung einer Maschine werden nur akzeptiert, wenn die Instanz des Bedienelements auf dem Bedienmodul 110 auch Schreibzugriff hat.

Durch die vorliegende Erfindung sind Bedienkonzepte für mehrere Maschinen bis hin zu kompletten Anlagen über ein einziges System deutlich besser abbildbar und lassen sich beliebig nach oben und nach unten skalieren. In einer Ausführungsform werden alle Bedienmodule 110 über einen Inhaltepool (z.B. der entfernte Server) befüllt. Erweiterungen, Nachrüstungen und Änderungen sind sehr einfach durchführbar, weil neue Inhalte, d.h. neue Bedienelemente, entsprechend ihrer Attribute sofort auf allen Bedienmodulen 110 richtig verhalten und entsprechend nutzbar oder nicht sichtbar sind. Folglich ergibt sich eine Zeit- und Kostenersparnis für sowohl den Hersteller als auch den Endbetreiber der Anlagensteuerung.

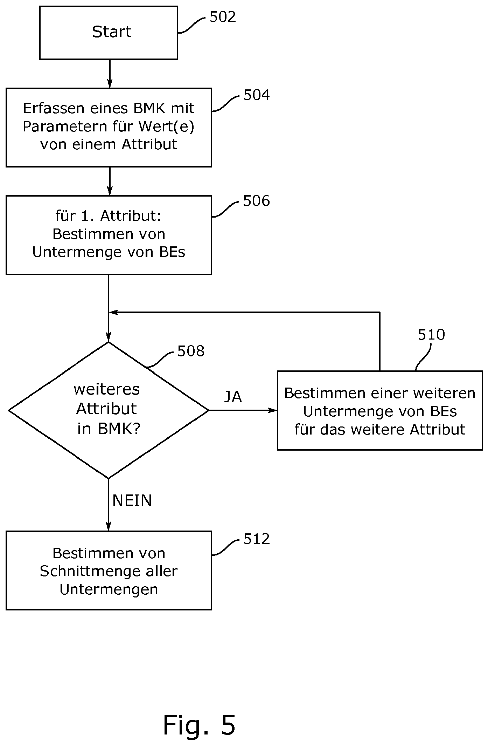

Figur 5 zeigt ein Verfahren zum dynamischen Erstellen und Anzeigen einer Bedienoberfläche auf einem Bedienmodul 110. Das Verfahren Startet im Schritt 502 und in Schritt 504 wird ein Betriebsmodulkontext (BMK) mit einem oder mehreren Parametern für einen oder mehrere Werte von einem Attribut erfasst. Um genau zu sein spezifiziert der Bedienmodulkontext einen oder mehrere Parameter und jeder Parameter legt einen oder mehrere Werte für ein Attribut fest.

In Schritt 506 wird für ein erstes Attribut eine Untermenge von Bedienelementen aus der Vielzahl aller Bedienelemente bestimmt. Die Untermenge umfasst alle Bedienelemente, die wenigstens einen festgelegten Wert des Attributs aufweisen. Dadurch wird die oben beschriebene ODER-Verknüpfung gewährleistet, da durch Festlegung mehrerer Werte eines Attributs in einem Parameter alle Bedienelemente ausgewählt werden, die wenigstens einen der Werte hat.

In Schritt 508 wird bestimmt, ob es noch einen weiteren Parameter (d.h. ein weiteres Attribut mit festgelegten Werten) in dem BMK gibt. Wenn es noch ein weiteres Attribut in dem BMK gibt, dann geht das Verfahren weiter zu Schritt 510, wo eine weitere Untermenge von Bedienelementen für das weitere Attribut bestimmt wird. Die weitere Untermenge umfasst alle Bedienelemente, die wenigstens einen festgelegten Wert des weiteren Attributs aufweisen. Danach geht das Verfahren weiter und bestimmt erneut in Schritt 508, ob ein weiteres Attribut in dem BMK spezifiziert ist.

Wenn alle Attribute (d.h. alle Parameter) in dem BMK abgearbeitet sind, wenn also keine weiteren Attribute in dem BMK spezifiziert sind, dann geht das Verfahren weiter zu Schritt 512. Hier wird eine Schnittmenge aus allen oben bestimmten Untermengen bestimmt. Durch das Bestimmen und Bilden einer Schnittmenge wird die oben beschriebene UND-Verknüpfung gewährleistet, da in der Schnittmenge nur diejenigen Bedienelemente enthalten sind, die in alle oben ausgewählten Werte in den Attributen gemeinsam haben.

Durch den letzten Schritt werden somit alle Bedienelemente bestimmt, die auf dem Bedienmodul angezeigt werden sollen.

## Patentansprüche

1. Verfahren zum dynamischen Erzeugen einer Bedienoberfläche (200) für ein Bedienmodul (110) zum Bedienen einer Maschine (Maschine 1...5) der Lebensmittelindustrie, wobei die Bedienoberfläche eine oder mehrere Bedienelemente (206...210; 310; 410-a...410-f) aus einer Vielzahl von einzeln gespeicherten Bedienelementen umfasst, wobei jedem Bedienelement der Vielzahl der einzeln gespeicherten Bedienelemente eine Vielzahl von Attributen (314-1 ...314-x) zugeordnet ist und jedem der zugeordneten Attribute wenigstens ein Wert zugewiesen ist,

   **gekennzeichnet durch**:
   Erfassen eines Bedienmodulkontexts, wobei der Bedienmodulkontext einen oder mehrere Parameter spezifiziert und jeder Parameter einen oder mehrere Werte für ein Attribut festlegt; für jedes der Attribute von dem einen oder mehreren Parametern, Bestimmen einer Untermenge aus der Vielzahl der einzeln gespeicherten Bedienelemente, wobei die Untermenge alle Bedienelemente umfasst, die wenigstens einen festgelegten Wert des Attributs aufweisen; und Bestimmen des auf der Bedienoberfläche zusammen anzuzeigenden einen oder der mehreren Bedienelemente aus den Untermengen, wobei die anzuzeigenden Bedienelemente solche Bedienelemente sind, die als Schnittmenge in allen Untermengen enthalten sind.

2. Verfahren nach Anspruch 1, wobei der eine oder die mehreren Parameter des Bedienmodulkontexts Werte von einem der folgenden Attribute beschreibt: einen Ort des Bedienmoduls (110), eine Benutzerberechtigung, eine Benutzeraufgaben-Beschreibung, ein Sicherheitslevel, eine Maschinen-Kennzeichnung, eine Modul-Kennzeichnung, ein Anlagenkennzeichen, eine Baugruppenkennzeichnung, eine Bauteilkennzeichnung, einen Maschinenzustand, einen Anlagenzustand, eine persönliche Einstellungen, persönliche Präferenzen, die automatisch ermittelt und/oder von einem Benutzer selbst konfiguriert werden, ein bisheriges Nutzungsverhalten, einen Ort der Maschine und/oder einen Ort des Moduls.

3. Verfahren nach Anspruch 1 oder 2, wobei die Bedienoberfläche (200) die anzuzeigenden einen oder mehreren Bedienelementen zur Laufzeit gemeinsam auf der Bedienoberfläche, gemäß verschiedener Bedienmodulkontexte umfasst, anzeigt.

4. Verfahren nach Anspruch 3, wobei die anzuzeigenden einen oder mehreren Bedienelemente, die gemäß verschiedener Bedienmodulkontexte angezeigt werden, als eine Gruppe von Bedienelementen in einem Speicherelement gespeichert werden und als Gruppe von Bedienelementen aufgerufen werden.

5. Verfahren nach einem der Ansprüche 1 bis 4, wobei die Bedienelemente in einer Speichereinheit eines Servers gespeichert sind und die Bedienoberfläche (200) durch entsprechende Referenzierung auf die Bedienelemente auf dem Server gebildet wird.

6. Verfahren nach einem der Ansprüche 1 bis 5, das des Weiteren ein automatisches Spezifizieren eines oder mehrerer weiterer Parameter umfasst, die jeweils einen Wert entsprechend einer eindeutigen Identifizierung einer Maschine (Maschine 1...5) oder eines Moduls festlegen.

7. Verfahren nach einem der Ansprüche 1 bis 6, wobei der Bedienmodulkontext wenigstens teilweise von einer automatischen Standorterkennung des Bedienmoduls (110) abhängig ist.

8. Bedienmodul (110) zum Steuern und Bedienen einer Maschine (Maschine 1...5) der Lebensmittelindustrie, wobei

das Bedienmodul einen Bildschirm (112) zum Anzeigen der Bedienoberfläche (200) umfasst, und wobei
das Bedienmodul zum Ausführen des Verfahrens nach einem der Ansprüche 1 bis 7 eingerichtet ist.

9. Bedienmodul (110) nach Anspruch 8, wobei das Bedienmodul des Weiteren eine oder mehrere Eingabevorrichtungen (114) umfasst.

10. Bedienmodul (110) nach Anspruch 8, wobei das Bedienmodul ein Human Machine Interface, HMI, ist und wobei der Bildschirm (112) ein Touchscreen ist.

**Claims**

1. A method of dynamically creating a user interface (200) for an operating module (110) for operating a machine (Maschine 1...5) of the food industry, wherein the user interface comprises one or more operating elements (206...210; 310; 410-a...410-f) of a plurality of individually stored operating elements, wherein each operating element of the plurality of individually stored operating elements is associated with a plurality of attributes (314-1... 314-x) and at least one value is assigned to each of the associated attributes,

**characterized by**
acquiring an operating module context, the operating module context specifying one or more parameters and each parameter specifying one or more values for an attribute;
for each of the attributes of the one or more parameters, determining a subset of the plurality of individually stored operating elements, the subset comprising all operating elements having at least one specified value of the attribute; and determining from the subsets the one or more operating elements to be displayed on the user interface, wherein the operating elements to be displayed are operating elements that are comprised as an intersection in all the subsets.

2. The method according to claim 1, wherein the one or more parameters of the operating module context specifies values of an attribute of the following attributes: a location of the operating module (110), a user authorization, a user task description, a safety level, a machine identification, a module identification, a plant characteristic, an assembly unit identification, a component identification, a machine status, a plant status, a personal setting, personal preferences that are automatically determined and/or configured by a user, a previous usage behavior, a location of the machine and/or a location of the module.

3. The method according to claim 1 or 2, wherein the user interface (200) jointly displays the one or more operating elements to be displayed at runtime on the user interface according to various operating module contexts.

4. The method according to claim 3, wherein the one or more operating elements to be displayed according to various operating module contexts are stored as a group of operating elements in a storage element and retrieved as a group of operating elements.

5. The method according to one of the claims 1 to 4, wherein the operating elements are stored in a storage unit of a server and wherein the user interface (200) is formed using a respective reference to the operating elements on the server.

6. The method according to one of the claims 1 to 6, further comprising automatically specifying one or more additional parameter, each of the one or more additional parameter specifying a value according to a unique identification of a machine (Maschine 1...5) or a module.

7. The method according to one of the claims 1 to 6, wherein the operating module context depends at least partially on an automatic recognition of the location of the operating module (110).

8. An operating module (110) for controlling and operating a machine (Maschine 1... 5) in the food industry, wherein

the operating module comprises a display (112) for displaying the user interface (200), and wherein
the operating module is adapted to perform the method of according to any one of claims 1 to 7.

9. The operating module (110) according to claim 8, wherein the operating module further comprises one or more input means (114).

10. The operating module (110) according to claim 8, the operating module being a Human Machine Interface, HMI, wherein the display (112) is a touch screen.

**Revendications**

1. Procédé pour générer de manière dynamique une interface utilisateur (200) pour un module de commande (110) pour la commande d'une machine (machine 1...5) dans l'industrie alimentaire, dans lequel l'interface utilisateur présente un ou plusieurs éléments de commande (206...210 ; 310 ; 410-a... 410-f) parmi une pluralité d'éléments de commande stockés individuellement, dans lequel une pluralité d'attributs (314-1... 314-x) est associée à chaque élément de commande de la pluralité d'éléments de commande stockés individuellement et au moins une valeur est attribuée à chacun des attributs associés,

   **caractérisé par** les étapes consistant à :

   détecter un contexte de module de commande, le contexte de module de commande spécifiant un ou plusieurs paramètres et chaque paramètre définissant une ou plusieurs valeurs pour un attribut ;
   pour chacun des attributs des un ou plusieurs paramètres, déterminer un sous-ensemble parmi la pluralité d'éléments de commande stockés individuellement, dans lequel le sous-ensemble comprend tous les éléments de commande qui présentent au moins une valeur définie de l'attribut ; et
   déterminer un ou plusieurs éléments de commande à afficher ensemble sur l'interface utilisateur à partir des sous-ensembles, dans lequel les éléments de commande à afficher sont des éléments de commande qui sont contenus en tant que recoupement dans tous les sous-ensembles.

2. Procédé selon la revendication 1, dans lequel les un ou plusieurs paramètres du contexte du module d'exploitation décrivent des valeurs de l'un des attributs suivants : un emplacement du module d'exploitation (110), une autorisation d'utilisateur, une description de tâche d'utilisateur, un niveau de sécurité, un identifiant de machine, un identifiant de module, un identifiant d'installation, un identifiant de chaînes d'assemblage, un identifiant de composant, un état de machine, un état d'installation, des paramètres personnels, des préférences personnelles déterminées automatiquement et/ou configurées par un utilisateur lui-même, un comportement d'utilisation antérieur, un emplacement de la machine et/ou un emplacement du module.

3. Procédé selon la revendication 1 ou 2, dans lequel l'interface utilisateur (200) affiche les un ou plusieurs éléments de commande à afficher ensemble au moment de l'exécution sur l'interface utilisateur, en fonction de différents contextes de module de commande.

4. Procédé selon la revendication 3, dans lequel les un ou plusieurs éléments de commande à afficher, qui sont affichés selon différents contextes de module de commande, sont stockés sous la forme d'un groupe d'éléments de commande dans un élément de stockage et sont appelés sous la forme d'un groupe d'éléments de commande.

5. Procédé selon l'une quelconque des revendications 1 à 4, dans lequel les éléments de commande sont stockés dans une unité de stockage d'un serveur et l'interface utilisateur (200) est formée par référence correspondante aux éléments de commande sur le serveur.

6. Procédé selon l'une quelconque des revendications 1 à 5, comprenant en outre une spécification automatique d'un ou plusieurs autres paramètres, chacun définissant une valeur correspondant à une identification unique d'une machine (machine 1...5) ou d'un module.

7. Procédé selon l'une quelconque des revendications 1 à 6, dans lequel le contexte de module de commande dépend au moins partiellement d'une localisation automatique du module de commande (110).

8. Module de commande (110) pour contrôler et commander une machine (machine 1...5) dans l'industrie alimentaire, dans lequel

   le module de commande comprend un écran (112) pour afficher l'interface utilisateur (200), et dans lequel
   le module de commande est conçu pour exécuter le procédé selon l'une quelconque des revendications 1 à 7.

9. Module de commande (110) selon la revendication 8, dans lequel le module de commande comprend en outre un ou plusieurs dispositifs d'entrée (114).

10. Module de commande (110) selon la revendication 8, dans lequel le module de commande est une interface homme-machine (IHM) et dans lequel l'écran (112) est un écran tactile.

100

Maschine 1

m 1-1    m 1-2

102-1

104-1

Maschine 2

m 2-1    m 2-3    m 2-2

102-2

Maschine 3

m 3-1

102-3

104-2

Maschine 4

m 4-1    ...    m 4-n

102-4

Maschine 5

m 5-1    m 5-2

102-5

101

110

Bedienmodul

114

112

Fig. 1

Fig. 2

Fig. 3

410-a

| BE 1 |
| --- |
| A1(a1, a2) |
| A2(b1, b5, b7) |
| A3(c3, c5) |
| A4(d1, d2, d5) |

410-b

| BE 2 |
| --- |
| A1(a1, a3) |
| A2(b2, b5) |
| A3(c1, c2, c3) |
| A4(d2, d3, d5) |

410-c

| BE 3 |
| --- |
| A1(a3) |
| A2(b1) |
| A3(c1, c2) |
| A4(d1, d2) |

410-d

| BE 4 |
| --- |
| A1(a2) |
| A2(b1, b2) |
| A3(c1, c3) |
| A4(d3, d4) |

410-e

| BE 5 |
| --- |
| A1(a1, a2, a3) |
| A2(b3, b4) |
| A3(c1) |
| A4(d1, d2, d3) |

410-f

| BE 6 |
| --- |
| A1(a1) |
| A2(b2, b3, b5) |
| A3(c5) |
| A4(d2, d5) |

# Fig. 4

```
          ┌─────────────┐  ⌐502
          │    Start    │
          └─────────────┘
                 │
                 ▼
       ┌────────────────────┐  ⌐504
       │ Erfassen eines BMK │
       │  mit Parametern    │
       │ für Wert(e) von    │
       │   einem Attribut   │
       └────────────────────┘
                 │
                 ▼
       ┌────────────────────┐  ⌐506
       │   für 1. Attribut: │
       │    Bestimmen von   │
       │ Untermenge von BEs │
       └────────────────────┘
                 │
                 ▼
              ◇ 508
           weiteres                    ┌──────────────────────┐  ⌐510
           Attribut    ──── JA ──────▶ │ Bestimmen einer      │
           in BMK?                     │ weiteren Untermenge  │
              ◇                        │ von BEs für das      │
              │                        │ weitere Attribut     │
            NEIN                       └──────────────────────┘
              │
              ▼
       ┌────────────────────┐  ⌐512
       │    Bestimmen von   │
       │  Schnittmenge aller│
       │    Untermengen     │
       └────────────────────┘
```

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014218211 A1
- DE 102008053765 A1
- EP 1895374 A2